# FASCICULE DE BREVET EUROPEEN

(11) **EP 0 396 437 B1**
(45) Date de publication et mention de la délivrance du brevet: **20.07.1994**
(21) Numéro de dépôt: 90400871.1
(22) Date de dépôt: 30.03.1990
(51) Int. Cl.: H02G 5/06

(54) **Dispositif répartiteur de puissance pour installation électrique**
Leistungsverteilervorrichtung für elektrische Einrichtung
Power distributing apparatus for electrical installation

(30) Priorité: 03.05.1989 FR 8906150
(43) Date de publication de la demande: 07.11.1990
(73) Titulaire: TELEMECANIQUE, 92504 Rueil Malmaison Cedex (FR)
(72) Inventeur: Cohen, Jacques, F-21160 Couchey (FR); Nourry, Daniel, F-21000 Dijon (FR); Thierry, Jean-Pierre, F-21560 Couternon (FR)
(74) Mandataire: de Saint-Palais, Arnaud Marie

(56) Documents cités:
- BE-A- 750 700
- FR-A- 2 225 860
- US-A- 3 018 320
- US-A- 3 187 086

## Description

La présente invention concerne un dispositif répartiteur de puissance pour installation électrique basse tension, ce dispositif étant par exemple associable à des appareils électriques de commande et/ou de protection logés dans un châssis, une armoire ou un coffret.

De tels dispositifs connus comprennent un jeu de barres de puissance horizontales et une enveloppe isolante de forme allongée logeant le jeu de barres, susceptible d'être fixée sur un support et présentant vers l'avant, c'est-à-dire vers l'installateur ou l'utilisateur, une pluralité d'orifices. Ces orifices servent à la connexion de conducteurs qui assurent la liaison électrique entre les barres et des bornes de puissance d'appareils électriques propres à l'installation, ces appareils étant eux-mêmes montés sur des rails parallèles au dispositif ou sur des socles fixés aux rails.

Il est souhaitable de pouvoir construire facilement des dispositifs répartiteurs de longueur variable dans lesquels sera respecté un isolement satisfaisant entre les différentes barres. De plus, les dispositions connues, prises pour tenir compte de la dilatation thermique relative de l'enveloppe isolante par rapport au support, sont encombrantes et peu commodes.

L'invention a pour but de répondre à ces désidérata et d'éviter ces inconvénients. Elle vise notamment à faciliter l'assemblage du dispositif répartiteur sans nuire à l'isolement entre barres grâce à un dispositif répartiteur de conception simple.

Elle a pour autre but d'autoriser une dilatation relative de l'enveloppe isolante par rapport au support à l'aide de moyens simples et peu encombrants.

Elle propose à cet effet un dispositif répartiteur de puissance pour installation électrique basse tension comprenant :
- un jeu de barres de puissance,
- une enveloppe isolante de forme allongée qui loge le jeu de barres et qui présente vers l'avant une pluralité d'orifices pour le passage de terminaisons de conducteurs en vue d'assurer la liaison entre les barres et des bornes respectives d'appareils électriques de commande et/ou de protection montés dans l'installation, cette enveloppe présentant au moins deux zones de fixation sur un support,
- l'enveloppe isolante présente un organe autorisant la dilatation thermique relative entre elle-même et le support, cet organe étant associé à l'une au moins des zones de fixation,
- l'enveloppe isolante comporte plusieurs modules isolants comprenant, dans des régions adjacentes, des fentes de passage des barres et des moyens d'assemblage mutuel par emboîtement et/ou encliquetage,
   caractérisé par le fait que les moyens d'assemblage mutuel comprennent des éléments d'emboîtement mutuel contigus aux barres et agencés pour augmenter les cheminements de fuite entre barres dans la zone de jonction des modules.

On peut ainsi construire facilement le dispositif répartiteur avec des longueurs différentes en fonction de la largeur de l'installation et/ou du nombre prévisible d'appareils à connecter sans avoir besoin de stocker un grand nombre de pièces. L'emboîtement des modules facilite leur assemblage, par exemple par préfabrication en usine, sans nuire à l'isolement entre barres.

Selon un aspect préférentiel de l'invention, l'organe de dilatation est un embout, de préférence emboîtable, situé à une extrémité de l'enveloppe isolante. D'une part, l'embout absorbe la dilatation relative de l'enveloppe par rapport au support, cette dilatation pouvant être assez importante par suite de l'échauffement des barres et points de connexion. D'autre part, l'embout assure la fermeture de l'extrémité de l'enveloppe isolante et, le cas échéant, supporte les extrémités des barres.

L'enveloppe isolante peut comprendre, à une extrémité, une boîte de connexion amont, de préférence emboîtable, logeant des organes qui assurent la connexion du jeu de barres à des conducteurs amont, cette boîte comportant l'une des zones de fixation et, éventuellement, un organe de dilatation associé. La boîte de connexion peut avantageusement permettre un accès des conducteurs amont par deux côtés opposés, ce qui permet de placer la boîte à gauche ou à droite du dispositif répartiteur.

Les moyens d'emboîtement mutuel entre les modules de l'enveloppe isolante, l'embout et la boîte de connexion amont peuvent être remplacés ou complétés par des moyens d'encliquetage.

D'autres aspects et avantages de l'invention ressortiront de la description d'un exemple de réalisation non limitatif, en regard des dessins annexés.
La figure 1 montre schématiquement un dispositif répartiteur de puissance selon l'invention ;
La figure 2 représente en élévation un dispositif répartiteur préfabriqué à deux modules, embout dilatable et boîte de connexion amont emboîtés et encliquetés ;
Les figures 3 et 4 sont deux vues en perspective, respectivement de l'intérieur et de l'extérieur du répartiteur, montrant l'embout de dilatation ;
La figure 5 est une vue de l'embout en coupe selon le plan V-V′ indiqué sur la figure 2 ;
Les figures 6 et 7 montrent à plus grande échelle et avec arrachements partiels, une vue de dessous et une vue en élévation du répartiteur de la figure 2 ;
La figure 8 est une vue explosée en coupe agrandie selon VIII-VIII du répartiteur de la figure 7 ; et
La figure 9 montre le détail A de la figure 7.

Le dispositif répartiteur de puissance 1 illustré sur les figures est destiné à être fixé sur un support 2 tel qu'un rail profilé, un châssis ou une platine perforée ou pleine, ce support étant indépendant ou faisant partie d'une enveloppe de distribution électrique telle qu'une armoire ou un coffret. Le dispositif répartiteur peut être assemblé par un installateur, mais il est de préférence préfabriqué en usine à la longueur voulue et monté par l'installateur sur le support.

Le répartiteur comporte un jeu de barres de puissance 10 en métal conducteur dont le nombre correspond à celui des liaisons électriques à établir, d'une part, avec des conducteurs amont 11, d'autre part, avec des connecteurs aval 12 électriquement reliés par des conducteurs 13 à des appareils de commande et/ou de protection 14 tels que des interrupteurs, contacteurs disjoncteurs ou analogues. Les appareils en question sont portés, soit par un rail normalisé 15 parallèle au répartiteur et à ses barres, soit par un socle 16 associé au connecteur et lui-même encliqueté sur le support 2 lorsque celui-ci est un profilé.

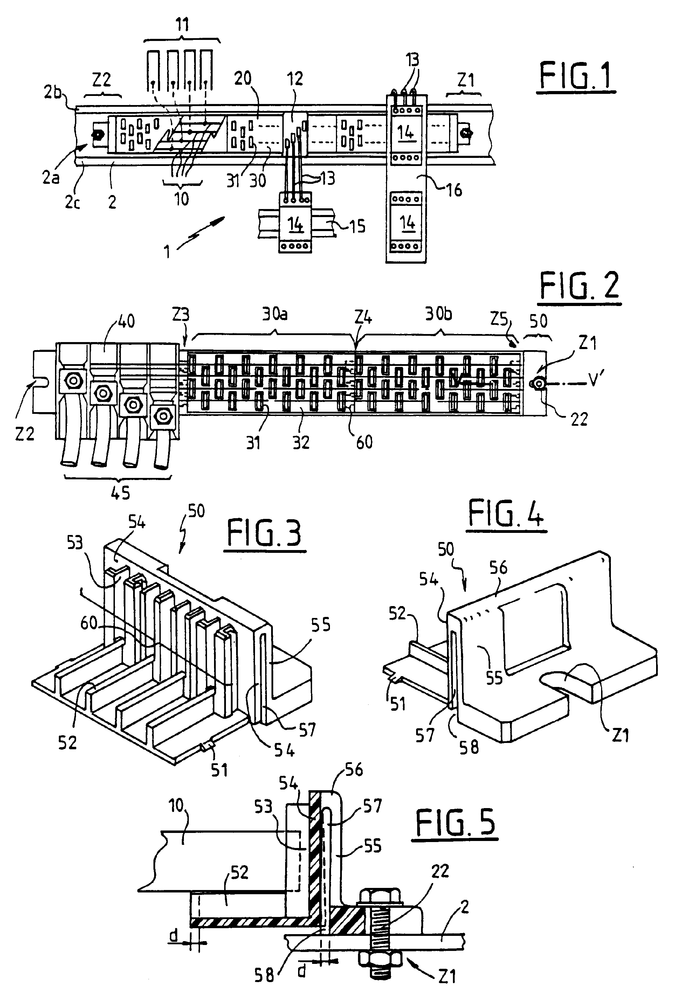

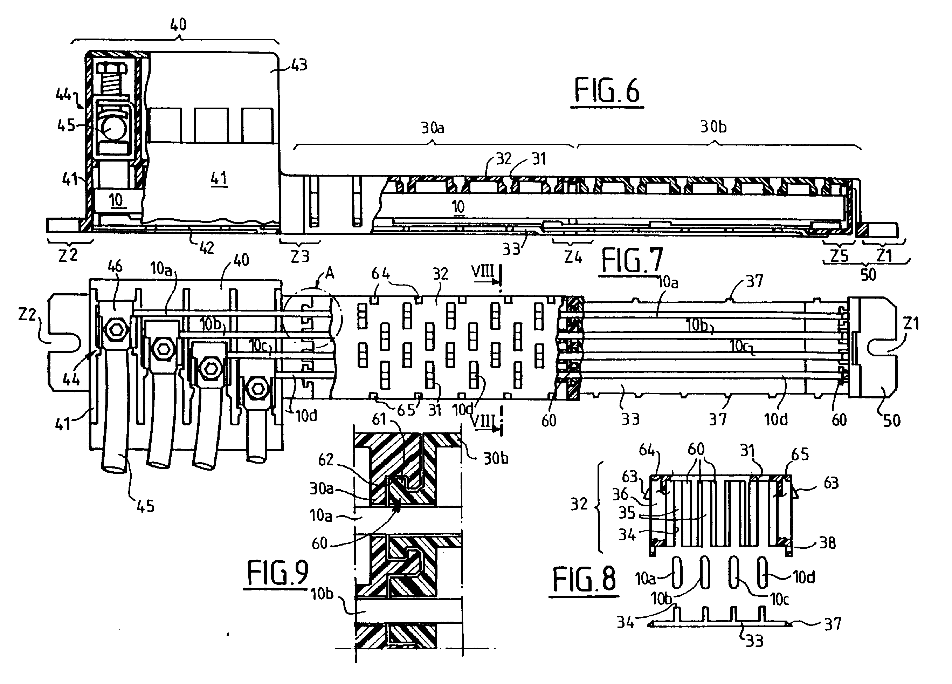

Le répartiteur 1 comprend une enveloppe isolante 20 de forme allongée, logeant le jeu de barres 10. L'enveloppe est en matière plastique moulée et se compose dans le présent mode de réalisation de plusieurs modules 30, par exemple deux modules 30a, 30b sur les figures 2, 6 et 7. Cette composition permet un assemblage du dispositif avec un minimum de pièces. L'enveloppe présente vers l'avant une pluralité d'orifices 31 pour le passage de terminaisons des conducteurs 13. Ces terminaisons sont, soit les extrémités dénudées des conducteurs ou des embouts rapportés sur ceux-ci lorsqu'à chaque orifice 31 est associée une borne incluse dans le dispositif et électriquement reliée à une barre correspondante, soit des fiches lorsque les connecteurs 12 s'embrochent directement sur les barres. Les orifices 31 sont quinconcés mais peuvent aussi être alignés ; ils sont situés en regard des barres 10. L'enveloppe isolante 20 présente à ses extrémités deux zones de fixation Z1, Z2 sur le support 2, un ensemble vis-écrou 22 étant associé à chacune de ces zones. L'enveloppe isolante 20 se loge avantageusement dans l'espace central 2a d'un profilé chapeau 2, entre les ailes 2b, 2c de celui-ci.

L'enveloppe isolante 20 comprend également une boîte 40 de connexion amont et un embout 50 de fermeture et d'absorption de dilatation munis de plages de fixation correspondant aux zones Z1, Z2. La boîte 40 et l'embout 50 seront décrits plus loin, mais on peut observer dès maintenant que les modules 30 sont assemblés entre eux, à la boîte 40 et à l'embout 50 par des éléments d'emboîtement mutuel 60 (voir figures 2, 3 et 7 à 9) contigus aux barres et agencés pour augmenter les cheminements de fuite entre barres dans les zones de jonction Z3 entre le module 30a et la boîte de connexion 40, Z4 entre les modules 30a et 30b et Z5 entre le modulé 30b et l'embout 50. La figuré 6 montre le module 30a vu de l'extérieur dans sa partie gauche ; le reste du module 30a et le module 30b sont représentés en coupe dans un plan longitudinal perpendiculaire à celui de la figure 7. On voit à gauche de la figure 7 la boîte 40 et une partie du module 30a dont la partie supérieure est arrachée. Le reste du module 30a est vu de l'extérieur, sauf dans la région de jonction avec le module 30b, cette région étant montrée en coupe. Le reste du module 30b est illustré après retrait du plastron.

Chaque module 30 de l'enveloppe isolante se compose (figure 8) d'un plastron 32 à section en U, présentant les orifices 31 et formant une goulotte logeant les barres de puissance 10a-d, et d'une semelle plate 33 fixée au plastron par encliquetage. Le plastron et la semelle sont moulés en une matière plastique dont le coefficient de dilatation est supérieur à celui du métal des barres 10.

Les barres sont logées avec liberté de glissement axial dans des conformations de maintien 34 du plastron et de la semelle. On remarque que les éléments d'emboîtement 60 sont prévus de part et d'autre de fentes 35 ménagées dans les parois 36 d'extrémité des modules 30 de manière à créer un effet de labyrinthe pour les lignes de fuite. Il va de soi que l'on peut concevoir d'autres éléments d'emboîtement que ceux représentés, mais contribuant de manière similaire à l'isolement.

La semelle 33 comprend des éléments latéraux d'encliquetage 37 qui coopèrent avec des éléments complémentaires 38 du plastron. Les semelles 33 des différents modules se recouvrent légèrement dans des zones Z6 légèrement décalées par rapport aux zones de jonction Z4, Z5.

La semelle 33 pourrait, en variante, avoir une section en U, le plastron 32 étant alors un simple couvercle plat.

La boîte de connexion amont 40 comprend un corps 41, une semelle 42 et un couvercle 43. Le corps 41 est muni de la plage de fixation Z2 et loge des bornes 44 de serrage pour les conducteurs amont 45. Chaque borne 44 comprend une pièce conductrice 46 en contact direct avec la barre correspondante 10a-d du dispositif. Des cloisons appropriées assurent dans la boîte 40 et les modules 30 l'isolement entre phases ; l'isolement est assuré de manière satisfaisante dans la zone Z3 par des éléments d'emboîtement identiques à ceux des zones Z4. Le détail A de la zone Z3 est représenté agrandi sur la figure 9 et montre la complémentarité de forme entre des collets 61 et des gorges 62 des éléments 60.

L'embout 50 est en matière plastique semi-rigide et se présente sous forme de lyre (figures 3 à 5) présentant des éléments d'emboîtement 60 pour s'emboîter dans les éléments complémentaires du module adjacent 30b, ainsi que des pattes d'encliquetage 51 pour s'encliqueter dans des ouvertures du plastron du module 30b. L'embout comprend une plage Z1 de fixation au support 2. Il est prévu pour une extrémité libre des barres 10 des nervures 52 de maintien dans l'alignement des nervures 34 de la semelle 33 adjacente et des rainures 53 délimitées par les éléments d'emboîtement 60 et par une paroi 54 de l'embout. Les rainures 53 ont une profondeur suffisante pour assurer dans tous les cas le maintien des extrémités libres des barres 10. La paroi 54 et une paroi contiguë 55 sont raccordées par un pont 56 et définissent entre elles une fente 57. La largeur de la fente dans sa région ouverte 58 est déterminée pour permettre à la paroi 54 de se rapprocher de la paroi 55 au plus d'une distance d lorsque l'enveloppe isolante 20 se dilate davantage que le support 2.

L'organe de dilatation pourrait aussi être constitué par un système de fixation avec jeu utilisant un orifice oblong, mais l'embout élastique de fermeture décrit a pour avantage de ne pas être tributaire de l'effort de serrage exercé par l'installateur dans la zone de fixation.

Lorsque la connexion amont s'effectue par d'autres moyens que la boîte 40, on peut prévoir un embout de fermeture et de dilatation 50 à chaque extrémité de l'enveloppe isolante.

On notera que l'enveloppe isolante présente des pans inclinés 63 permettant l'encliquetage de connecteurs 12 au moyen de pattes élastiques (voir figure 8). De plus, des moyens de détrompage sont prévus sur ou dans l'enveloppe isolante pour interdire les erreurs de montage des connecteurs 12 ou des socles 16. Les moyens de détrompage en question sont avantageusement des opercules défonçables prévus sur les modules 30 de l'enveloppe isolante ; il peut s'agir de deux rangées distinctes d'opercules 64, 65 situées respectivement en haut et en bas des modules (figure 7). Donc, en fonction d'un défonçage préalablement effectué en usine de l'une ou l'autre rangée d'opercules, un élément mâle d'un connecteur pourra s'engager dans un opercule défoncé et ne pourra pas être engagé dans un opercule non défoncé ; on est ainsi assuré que les connexions de phase seront correctes.

Le montage du dispositif s'en trouve facilité, puisqu'on peut utiliser une même boîte de connexion à gauche ou à droite, en lui fixant des modules d'un même type et en associant aux modules des connecteurs ou socles ayant toujours la même position relativement à l'utilisateur.

## Revendications

1. Dispositif répartiteur de puissance pour installation électrique basse tension, comprenant :
- un jeu de barres de puissance (10),
- une enveloppe isolante (20) de forme allongée qui loge le jeu de barres et qui présente vers l'avant une pluralité d'orifices (31) pour le passage de terminaisons de conducteurs en vue d'assurer la liaison entre les barres et des bornes respectives d'appareils électriques (14) de commande et/ou de protection montés dans l'installation, cette enveloppe présentant au moins deux zones de fixation (Z1, Z2) sur un support (2),
- l'enveloppe isolante présente un organe (50) autorisant la dilatation thermique relative entre elle-même et le support, cet organe étant associé à l'une au moins des zones de fixation,
- l'enveloppe isolante comporte plusieurs modules isolants (30) comprenant, dans des régions adjacentes (36), des fentes (35) de passage des barres et des moyens d'assemblage mutuel par emboîtement et/ou encliquetage,
caractérisé par le fait que les moyens d'assemblage mutuel comprennent des éléments d'emboîtement mutuel (60) contigus aux barres et agencés pour augmenter les cheminements de fuite entre barres dans la zone de jonction (Z4) des modules.

2. Dispositif selon la revendication 1,
caractérisé par le fait que l'enveloppe isolante (20) comprend à une extrémité une boîte de connexion amont (40) logeant des organes (44) qui assurent la connexion du jeu de barres (10) à des conducteurs amont (45), la boîte de connexion amont comportant l'une des zones de fixation (Z2) de l'enveloppe (20) sur le support (2) et étant assemblée par emboîtement au module adjacent (30a).

3. Dispositif selon l'une des revendications 1 et 2,
caractérisé par le fait qu'en position de montage sur le support (2), les barres (10) sont des barres plates dont les plans sont horizontaux, l'emboîtement mutuel des modules (30) s'effectuant selon une direction horizontale.

4. Dispositif selon l'une des revendications précédentes,
caractérisé en ce que l'organe de dilatation (50) est un embout situé à une extrémité de l'enveloppe isolante (20), cet embout étant conçu de manière à assurer la fermeture de ladite extrémité.

5. Dispositif selon l'une des revendications 1 à 4,
caractérisé par le fait que l'organe de dilatation (50) a la forme d'une lyre.

6. Dispositif selon l'une des revendications 1 à 5,
caractérisé par le fait que l'embout de dilatation (50) comprend des nervures (52) et rainures (53) de maintien pour l'extrémité libre des barres (10).

7. Dispositif selon l'une des revendications 1 à 6,
caractérisé par le fait que chaque module (30) de l'enveloppe isolante (20) se compose d'un plastron (32) à section en U auquel est encliquetée une semelle (33), les barres (10) étant logées avec liberté de glissement axial entre le plastron et la semelle dans des conformations de maintien (34).

8. Dispositif selon la revendication 7,
caractérisé par le fait que l'embout de dilatation (50) est encliqueté au plastron (32) du module isolant adjacent (30b).

9. Dispositif selon l'une des revendications précédentes,
caractérisé par le fait que l'enveloppe isolante (20) comprend à une extrémité une boîte de connexion amont (40) logeant des organes (44) qui assurent la connexion du jeu de barres à des conducteurs amont (45) la boîte de connexion amont comportant l'une des zones de fixation (Z2) de l'enveloppe (20) sur le support (2).

10. Dispositif selon la revendication 9,
caractérisé par le fait que la boîte de connexion amont (40) est emboîtée sur le module isolant adjacent (30a).

11. Dispositif selon l'une des revendications précédentes,
caractérisé en ce que l'enveloppe isolante comprend une boîte de connexion amont (40) qui lui est assemblée et comporte l'une des zones de fixation (Z2).

12. Dispositif selon l'une des revendications précédentes,
caractérisé par le fait que l'enveloppe isolante (20) comprend des moyens de détrompage pour les connecteurs (12) ou socles (16) de connexion aval.

13. Dispositif selon la revendication 12,
caractérisé par le fait que les moyens de détrompage sont des opercules défonçables (64, 65) prévus selon deux rangées distinctes sur ou dans les modules (30) de l'enveloppe isolante.

14. Dispositif selon l'une des revendications 1 à 13,
caractérisé par le fait que l'enveloppe isolante (20) est logée dans l'espace central (2a) d'un profilé chapeau (2).

## Patentansprüche

1. Leistungsverteilervorrichtung für eine elektrische Niederspannungseinrichtung, mit :
- einem Stromschienensystem (10),
- einem länglichen Isoliergehäuse (20), welches das Stromschienensystem aufnimmt und auf der Vorderseite eine Vielzahl von Durchgangslöchern (31) für die Leiterenden aufweist, um die Verbindung zwischen den Stromschienen und entsprechenden Klemmen der in der Einrichtung vorgesehenen Steuer- und/oder Schutzgeräte (14) herstellen zu können, wobei besagtes Gehäuse mindestens zwei Befestigungsbereiche (Z1, Z2) auf einem Träger (2) aufweist.
- und das Isoliergehäuse ein Organ (50) aufweist, welches eine relative Wärmedehnung zwischen dem Gehäuse und dem Träger ermöglicht, wobei besagtes Organ mindestens einem der Befestigungsbereiche zugeordnet ist,
- das Isoliergehäuse mehrere Isoliermodule (30) aufweist, die in benachbarten Bereichen (36) Durchgangsschlitze (35) für die Schienen und Mittel zum Verbinden durch Ineinanderfügen und/oder Einrasten aufweisen,
dadurch gekennzeichnet, dass die Mittel zum gegenseitigen Verbinden den Schienen benachbarte Elemente (60) zum Ineinanderfügen aufweisen, die so ausgelegt sind, dass sie die Kriechstrecken der Stromverluste zwischen den Schienen im Verbindungsbereich (Z4) der Module verlängern.

2. Vorrichtung nach Anspruch 1,
dadurch gekennzeichnet, dass das Isoliergehäuse (20) an einem Ende eine obere Abzweigdose (40) aufweist, welche die Organe (44) aufnimmt, die den Anschluss des Schienensystems (10) an obere Leiter (45) ermöglichen, wobei die obere Abzweigdose einen der Befestigungsbereiche (Z2) des Gehäuses (20) am Träger (2) aufweist und mit dem nächsten Modul (30a) durch Einfügen verbunden ist.

3. Vorrichtung nach einem der Ansprüche 1 und 2,
dadurch gekennzeichnet, dass die Schienen (10), wenn sie auf den Träger (2) montiert sind, flach und in der Horizontalebene angeordnet sind und das Ineinanderfügen der Module (30) in waagerechter Richtung erfolgt.

4. Vorrichtung nach einem der vorhergehenden Ansprüche,
dadurch gekennzeichnet, dass das Ausdehnungsorgan (50) ein an einem Ende des Isoliergehäuses (20) angeordnetes Ansatzstück ist, das so ausgelegt ist, dass es besagtes Ende verschliesst.

5. Vorrichtung nach einem der Ansprüche 1 bis 4,
dadurch gekennzeichnet, dass das Dehnungsorgan (50) die Form einer Leier hat.

6. Vorrichtung nach einem der Ansprüche 1 bis 5,
dadurch gekennzeichnet, dass das Dehnungsendstück (50) mit Halterippen (52) und - Rillen (53) für das freie Ende der Schienen (10) versehen ist.

7. Vorrichtung nach einem der Ansprüche 1 bis 6,
dadurch gekennzeichnet, dass jeder Modul (30) des Isoliergehäuses (20) aus einem im Querschnitt U-förmigen Vorderteil (32) besteht, in das eine Sohle (33) einrastet und die Schienen (10) axial frei verschiebbar zwischen dem Vorderteil und der Sohle in Haltemitteln (34) angeordnet sind.

8. Vorrichtung nach Anspruch 7,
dadurch gekennzeichnet, dass das Dehnungsstück (50) im Vorderteil (32) des benachbarten Isoliermoduls (30b) einrastet.

9. Vorrichtung nach einem der vorhergehenden Ansprüche,
dadurch gekennzeichnet, dass das Isoliergehäuse an einem Ende eine obere Abzweigdose (40) aufweist, welche die Organe (44) zum Anschluss des Schienensystems an obere Leiter (45) aufnimmt, wobei die obere Abzweigdose einen der Befestigungsbereiche (Z2) des Gehäuses (20) am Träger (2) aufweist.

10. Vorrichtung nach Anspruch 9,
dadurch gekennzeichnet, dass die obere Abzweigdose (40) in den benachbarten Isoliermodul (30a) eingesteckt wird.

11. Vorrichtung nach einem der vorhergehenden Ansprüche,
dadurch gekennzeichnet, dass das Isoliergehäuse eine obere Abzweigdose (40) aufweist, die mit ihm verbunden ist und einen der Befestigungsbereiche (Z2) aufweist.

12. Vorrichtung nach einem der vorhergehenden Ansprüche,
dadurch gekennzeichnet, dass das Isoliergehäuse (20) Unverwechselbarkeitsmittel für die Verbinder (12) oder Sockel (16) der unteren Verbindung aufweist.

13. Vorrichtung nach Anspruch 12,
dadurch gekennzeichnet, dass die Unverwechselbarkeitsmittel in zwei verschiedenen Reihen auf oder in den Modulen (30) des Isoliergehäuses vorgesehene eindrückbare Verschlüsse (64, 65) sind.

14. Vorrichtung nach einem der Ansprüche 1 bis 13,
dadurch gekennzeichnet, dass das Isoliergehäuse (20) im zentralen Bereich (2a) einer Hutschiene (2) angeordnet ist.

## Claims

1. Power distributor device for a low voltage electric installation, comprising :
- a set of power bars (10),
- an elongate insulating case (20) housing the set of bars, with at the front a plurality of orifices (31) for passing therethrough the terminations of conductors providing connection between the bars and respective terminals of electric control and/or protection appliances (14) mounted in the installation, said case having at least two zones (Z1, Z2) for fixing to a support (2),
- the insulating case having a member (50) allowing relative heat expansion between itself and the support, this member being associated with one at least of the fixing zones,
- the insulating case comprising several insulating modules (30) with, in adjacent regions (36), slits (35) for passing the bars therethrough and mutual assembly means by interlocking and/or snap-fitting,
characterized by the fact that the mutual assembly means comprise mutual interlocking elements (60) contiguous to the bars and adapted for increasing the leak paths between the bars in the junction zone (Z4) of the modules.

2. The device as claimed in claim 1,
characterized by the fact that said insulating case (20) has at one end an upstream connection box (40) housing members (44) connecting the set of bars (10) to upstream conductors (45), the upstream connection box comprising one of the zones (Z2) for fixing the case (20) on the support (2) and being assembled by interlocking with the adjacent module (30a).

3. The device as claimed in one of claims 1 and 2,
characterized by the fact that, in the mounted position on the support (2), the bars (10) are flat bars whose planes are horizontal, mutual interlocking of the modules (30) taking place in a horizontal direction.

4. The device as claimed in one of the preceding claims, characterized by the fact that the expansion member (50) is an end-piece situated at one end of the insulating case (20), said end-piece providing closure of said end.

5. The device as claimed in one of claims 1 to 4,
characterized in that the expansion member (50) has the shape of a lyre.

6. The device as claimed in one of claims 1 to 5,
characterized by the fact that said expansion end-pice (50) comprises ribs (52) and grooves (53) for holding the free end of the bars (10).

7. The device as claimed in one of claims 1 to 6,
characterized by the fact that each module (30) of the insulating case (20) is formed of a front cover (32) having a U section to which a base plate (33) is snap-fitted, the bars (10) being housed for axial sliding between the front cover and the plate in holding conformations (34).

8. The device as claimed in claim 7,
characterized in that said expansion end-piece (50) is snap-fitted in the cover (32) of the adjacent insulating module (30b).

9. The device as claimed in one of the preceding claims,
characterized by the fact that said insulating case (20) has at one end an upstream connection box (40) housing members (44) providing connection of the set of bars to upstream conductors (45), the upstream connection box comprising one of the zones (Z2) for fixing the case (20) on the support (2).

10. The device as claimed in claim 9,
characterized by the fact that said upstream connection box (40) is interlocked on the adjacent insulating module (30a).

11. The device as claimed in one of the preceding claims,
characterized in that the insulating case comprises an upstream connection box (40) which is assembled therewith and comprises one of the fixing zones (Z2).

12. The device as claimed in one of the preceding claims,
characterized by the fact that the insulating case (20) comprises foolproof means for the downsteam connectors (12) or connection bases (16).

13. The device as claimed in claim 12,
characterized in that said foolproof means are punch-out caps (64, 65) provided in two separate rows on or in the modules (30) of the insulating case.

14. The device as claimed in one of claims 1 to 13,
characterized by the fact that said insulating case (20) is housed in the central space (2a) of an extruded cover section (2).
